# EUROPÄISCHE PATENTANMELDUNG

(11) **EP 1 298 029 A2**
(43) Veröffentlichungstag der Anmeldung: **02.04.2003**
(21) Anmeldenummer: 02017339.9
(22) Anmeldetag: 02.08.2002
(51) Int. Cl.: B62D 1/181, B62D 1/185, B62D 1/187

(54) **Verfahren zum Positionieren eines Kraftfahrzeug-Lenkrads**

(30) Priorität: 29.09.2001 DE 10148328
(71) Anmelder: Bayerische Motoren Werke Aktiengesellschaft, 80809 München (DE)
(72) Erfinder: Steinke, Heinrich, 82008 Unterhaching (DE)

(57) **Zusammenfassung**

Die Erfindung betrifft ein Verfahren zum Positionieren eines mit einer verstellbaren Lenksäule verbundenen Kraftfahrzeug-Lenkrads mittels zumindest eines Stellmotors, wobei das Lenkrad während einer Lenkrad-Drehbewegung automatisch derart unterschiedlich positioniert wird, dass sich im Verlauf dieser Lenkrad-Drehbewegung aufgrund dieser PositionsÄnderung der Abstand zwischen einem festen Punkt am Lenkradkranz, an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei unveränderter Lenkrad-Position während der gleichen Lenkbewegung der Fall ist. Dabei kann die Positionsänderung des Lenkrades vom Verdrehwinkel des Lenkrades und/oder von der Verdrehgeschwindigkeit und/oder von der Position des Fahrzeugsitzes und/oder der Lehne desselben abhängig sein.

## Beschreibung

Die Erfindung betrifft ein Verfahren zum Positionieren eines mit einer verstellbaren Lenksäule verbundenen Kraftfahrzeug-Lenkrads mittels zumindest eines Stellmotors. Verstellbare Lenksäulen, mit Hilfe derer sich ein damit verbundenes Lenkrad optimal bezüglich der jeweiligen Sitzposition des Fahrzeug-Fahrers bzw. dessen Wunsch entsprechend positionieren lässt, sind in mannigfachen Ausführungsformen bekannt. Zumeist kann dabei die Neigung der Lenksäule geändert sowie das Lenkrad zum Oberkörper des Fahrers hin oder von diesem wegbewegt werden.

Eine optimale Sitzposition bezüglich des Fahrzeug-Lenkrads nimmt ein Fahrer eines Kraftfahrzeugs, insbesondere eines PKW's, ein, wenn die Arme im Ellenbogengelenk stets abgewinkelt sind. Insbesondere soll dies auch bei einem Verdrehen des Lenkrades ohne Umgreifen am Lenkradkranz gelten, d.h. ausgehend von der sog. Lenkrad-Neutralstellung, in der die lenkbaren Fahrzeugräder nicht eingeschlagen sind, bis zu einem Lenkrad-Verdrehwinkel von ca. 180° sollte eine abgewinkelte Armstellung eingehalten werden können.

Bei heute üblichen Lenkrädern kann diese Anforderung praktisch nur dann erfüllt werden, wenn die Drehachse des Lenkrads senkrecht zum Oberkörper des Fahrers mittig im wesentlichen auf die Verbindungslinie zwischen seinen beiden Schulter-Kugelgelenken auftrifft. In der Praxis jedoch verläuft die durch das Lenkrad beschriebene Ebene, die senkrecht zur Lenkrad-Drehachse ist, nicht parallel zum Fahrer-Oberkörper, sondern ist derart gegenüber diesem geneigt, dass die Lenkrad-Drehachse in Fahrtrichtung betrachtet schräg nach unten verläuft. Teilweise ist die Lenkrad-Drehachse, d.h. die sog. Lenkspindel, zusätzlich in einer zur Fahrbahn parallelen Ebene betrachtet geringfügig gegenüber der Fahrzeug-Längsachse geneigt. Schließlich wird ein Lenkrad oftmals desachsiert angebracht, d.h. dass die Lenkspindelachse nicht exakt durch den Mittelpunkt des Lenkrads verläuft, um einen größeren Freiraum zwischen der Lenkrad-Unterseite und dem Fahrzeug-Sitz zu haben.

Eine Folge dieser Lenkrad-Anordnung ist, dass sich bei einem Lenkrad-Einschlag um bspw. 90° (ausgehend von der Lenkrad-Neutralstellung) der Abstand zwischen einem festen Punkt des Lenkradkranzes, an dem - ohne dass ein Umgreifen erfolgt - der Fahrer den Lenkradkranz mit seiner Hand umfasst, und dem zu dieser Hand gehörenden Schultergelenk des Fahrers verändert, und zwar vergrößert. Eine nochmalige Vergrößerung dieses Abstandes tritt beim Weiterdrehen des Lenkrades um bspw. weitere 90° (ohne Umgreifen) auf. Erst bei Lenkwinkeln größer ca. 160° bis 180° wird üblicherweise umgegriffen, d.h. die Angriffsstelle der Hände am Lenkradkranz verändert.

Zumeist ist die soeben beschriebene Abstandsänderung bzw. -vergrößerung so groß, dass die jeweilige (linke bzw. rechte) Schulter des Fahrers nicht mehr an der Lehne des Fahrzeugsitzes abgestützt bleiben kann. Soll das Fahrzeug in einer starken Linkskurve bewegt werden, muss der Fahrer somit seine rechte Schulter von der Lehne weg nach vorne bewegen, und bei einer Rechtskurve dementsprechend seine linke Schulter, was grundsätzlich unerwünscht ist.

Eine Abhilfemaßnahme für diese geschilderte Problematik aufzuzeigen, ist Aufgabe der vorliegenden Erfindung.

Die Lösung dieser Aufgabe ist dadurch gekennzeichnet, dass das Lenkrad während einer Lenkrad-Drehbewegung automatisch derart unterschiedlich positioniert wird, dass sich im Verlauf dieser Lenkrad-Drehbewegung aufgrund dieser Positions-Änderung der Abstand zwischen einem festen Punkt am Lenkradkranz, an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei unveränderter Lenkrad-Position während der gleichen Lenkbewegung der Fall ist. Vorteilhafte Weiterbildungen sind im abhängigen Anspruch aufgelistet.

Erfindungsgemäß wird die Position des Lenkrads, die sich treffend bspw. durch die Lage des Lenkrad-Mittelpunkts bzw. Lenkrad-Drehpunktes im Innenraum des Kraftfahrzeugs beschreiben lässt, während einer Verdrehbewegung des Lenkrades um seinen Drehpunkt verändert. Diese Ortsveränderung bzw. Lageveränderung des Lenkrad-Dreh- oder Mittelpunks erfolgt dabei selbsttätig durch entsprechende Ansteuerung zumindest eines Stellmotors, der für die Lenksäulenverstellung und somit die Lenkrad-Positionierung zuständig ist. Diese Ortsveränderung bzw. Lageveränderung des Lenkrad-Dreh- oder Mittelpunks erfolgt dabei derart, dass das Lenkrad zumindest im Verlauf einer größeren Drehbewegung dem Fahrer quasi geringfügig entgegenkommt. Diese Orts- bzw. Lageveränderung soll somit dazu führen, dass sich der Abstand zwischen einem Punkt am Lenkradkranz, den der Fahrer in Händen hält und dem Abstützpunkt der jeweiligen Schulter des Fahrers an der Sitz-Lehne praktisch nicht oder nur sehr gering vergrößert, während das Lenkrad um seinen Drehpunkt verdreht wird. Somit kann der Fahrer ohne am Lenkrad-Kranz umzugreifen das Lenkrad ausgehend von seiner Neutralstellung bspw. um 180° verdrehen und dennoch beide Schultern an der Sitzlehne abgestützt belassen.

Von einer elektronischen Steuereinheit gesteuert kann oder können somit der oder die ggf. mehreren Stellmotoren die Lenksäule während einer vom Fahrer veranlassten Lenkrad-Drehbewegung derart geeignet verfahren, d.h. unterschiedlich positionieren, dass diese genannte Anforderung, nämlich die maximal geringe Abstandsvergrößerung, im Verlaufe dieser Lenkrad-Drehbewegung erfüllt wird. Neben einer Neigungsverstellung der Lenksäule kommt hierfür insbesondere eine (geringfügige) Längsverschiebung des Lenkrades zum Fahrer hin in Betracht, wobei dann bei einer Rück-Drehung des Lenkrades in seine Neutralstellung selbstverständlich wieder eine Rückbewegung des Lenkrades in seine Ausgangsposition, die in der Lenkrad-Neutralstellung eingestellt wurde, erfolgen soll. Bevorzugt wird somit beim Rückdrehen des Lenkrads in seine Neutralstellung das Lenkrad wieder (geringfügig) vom Fahrer wegverschoben.

In der genannten (bevorzugt) elektronischen Steuereinheit kann dabei festgelegt sein, wie bzw. in welchem Umfang die Positionsänderung des Lenkrads, d.h. des Lenkrad-Drehpunktes oder Lenkrad-Mittelpunktes insbesondere in Abhängigkeit vom Verdrehwinkel des Lenkrades durchgeführt wird. Dabei liefert grundsätzlich eine Aufschaltung, d.h. Addition oder Subtraktion von der Lenkrad-Position in Lenkrad-Neutralstellung die geeignetsten Resultate. In diesem Zusammenhang kann die Lenkrad-Position in Lenkrad-Neutralstellung mit berücksichtigt werden, d.h. wenn bspw. die Lenksäulen-Neigung relativ gering eingestellt ist, so bei einer gleichen Lenkrad-Verdrehbewegung eine geringere Positionsänderung erforderlich, als wenn die Lenksäule in Lenkrad-Neutralstellung bereits relativ steil steht. Ferner kann in diesem Zusammenhang die Position des Fahrzeugsitzes und/oder der Lehne desselben berücksichtigt werden, d.h. wenn der Sitz weiter vom Lenkrad entfernt ist, ist bspw. bei gleicher Lenkrad-Verdrehung eine größere Positionsänderung erforderlich, als wenn der Sitz dem Lenkrad relativ nahe ist. Entsprechendes gilt für die Neigung der Sitzlehne.

Ferner kann die Positionsänderung des Lenkrads bzw. des Lenkrad-Mittelpunktes oder Lenkrad-Drehpunktes auch abhängig von der Verdrehgeschwindigkeit des Lenkrads im Verlauf einer Drehbewegung sein. Daneben können eine Vielzahl von Details ergänzend zu oder auch abweichend von obigen Erläuterungen gestaltet sein, ohne den Inhalt der Patentansprüche zu verlassen. Stets erhält man mit den erfindungswesentlichen Merkmalen eine verbesserte Position des Fahrers bezüglich des Lenkrads auch bei einer (größeren) Verdrehbewegung desselben.

## Patentansprüche

1. Verfahren zum Positionieren eines mit einer verstellbaren Lenksäule verbundenen Kraftfahrzeug-Lenkrads mittels zumindest eines Stellmotors,
**dadurch gekennzeichnet, dass** das Lenkrad während einer Lenkrad-Drehbewegung automatisch derart unterschiedlich positioniert wird, dass sich im Verlauf dieser Lenkrad-Drehbewegung aufgrund dieser Positions-Änderung der Abstand zwischen einem festen Punkt (X) am Lenkradkranz, an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei unveränderter Lenkrad-Position während der gleichen Lenkbewegung der Fall ist.

2. Verfahren nach Anspruch 1, **gekennzeichnet durch** zumindest eines der folgenden Merkmale:
• die Positionsänderung ist abhängig vom Verdrehwinkel des Lenkrades
• die Positionsänderung ist abhängig von der Verdrehgeschwindigkeit
• die Positionsänderung ist abhängig von der Position des Fahrzeugsitzes und/oder der Lehne desselben
